# EUROPÄISCHE PATENTSCHRIFT

(11) **EP 3 487 954 B1**
(45) Veröffentlichungstag und Bekanntmachung des Hinweises auf die Patenterteilung: **10.03.2021**
(21) Anmeldenummer: 17748408.6
(22) Anmeldetag: 17.07.2017
(51) Int. Cl.: C09K 19/04, C09K 19/12

(54) **FLÜSSIGKRISTALLINE VERBINDUNGEN**
LIQUID CRYSTAL COMPOUNDS
COMPOSÉS À CRISTAUX LIQUIDES

(30) Priorität: 20.07.2016 EP 16180332
(43) Veröffentlichungstag der Anmeldung: 29.05.2019
(73) Patentinhaber: Merck Patent GmbH, 64293 Darmstadt (DE)
(72) Erfinder: LIETZAU, Lars, 64380 Rossdorf (DE); REIFFENRATH, Volker, 64380 Rossdorf (DE); GOEBEL, Mark, Winchester SO23 8GJ (GB)
(86) Internationale Anmeldenummer: PCT/EP2017/067957
(87) Internationale Veröffentlichungsnummer: WO 2018/015321

(56) Entgegenhaltungen:
- EP-A2- 1 126 006
- WO-A1-91/09008
- WO-A1-95/04789
- WO-A1-2005/019377
- WO-A1-2014/094949
- CN-A- 104 745 202
- CN-B- 103 254 910
- DE-A1- 1 947 600
- DE-A1- 4 325 985
- JP-A- H09 221 441
- DRZEWINSKI W: "Nitroarenes - the simple way to liquid crystalline fluoroalkyl-aryl ethers", LIQUID CRYSTALS, TAYLOR & FRANCIS, Bd. 37, Nr. 3, 1. März 2010 (2010-03-01), Seiten 335-338, XP001552740, ISSN: 0267-8292, DOI: 10.1080/02678291003611359
- ERIK B. PINXTERHUIS ET AL: "Fast, greener and scalable direct coupling of organolithium compounds with no additional solvents", NATURE COMMUNICATIONS, vol. 7, 2 June 2016 (2016-06-02), page 11698, XP055511504, DOI: 10.1038/ncomms11698
- YANG JING-YUN ET AL: "Copper-mediated trifluoromethylation of diaryliodonium salts with difluoromethyltriflate", JOURNAL OF FLUORINE CHEMISTRY, ELSEVIER, NL, vol. 186, 28 April 2016 (2016-04-28), pages 45-51, XP029536584, ISSN: 0022-1139, DOI: 10.1016/J.JFLUCHEM.2016.04.008
- JONATHAN T. REEVES ET AL: "Room Temperature Palladium-Catalyzed Cross Coupling of Aryltrimethylammonium Triflates with Aryl Grignard Reagents", ORGANIC LETTERS, vol. 12, no. 19, 1 October 2010 (2010-10-01), pages 4388-4391, XP055637670, US ISSN: 1523-7060, DOI: 10.1021/ol1018739

## Beschreibung

Die Erfindung betrifft Verbindungen der Formeln I1 bis I4 wie unten definiert, ein Verfahren zu ihrer Herstellung, flüssigkristalline Medien enthaltend mindestens eine Verbindung der Formeln I1 bis I4 sowie ihre Verwendung als Komponente(n) in flüssigkristallinen Medien. Darüber hinaus betrifft die vorliegende Erfindung Flüssigkristall- und elektrooptische Anzeigeelemente, welche die erfindungsgemäßen, flüssigkristallinen Medien enthalten. Die erfindungsgemäßen Verbindungen weisen als Strukturelement eine charakteristisch substituierten Biphenylgruppe auf.

In den vergangenen Jahren wurden die Anwendungsgebiete für flüssigkristalline Verbindungen auf verschiedene Arten von Anzeigevorrichtungen, elektrooptische Geräte, elektronische Komponenten, Sensoren, etc. erheblich ausgeweitet. Aus diesem Grund wurden eine Reihe verschiedener Strukturen vorgeschlagen, insbesondere auf dem Gebiet der nematischen Flüssigkristalle. Die nematischen Flüssigkristallmischungen haben bisher die breiteste Anwendung in flachen Anzeigevorrichtungen gefunden. Sie wurden besonders in passiven TN- oder STN-Matrixanzeigen oder Systemen mit einer TFT-Aktivmatrix eingesetzt.

Die erfindungsgemäßen, flüssigkristallinen Verbindungen können als Komponente(n) flüssigkristalliner Medien verwendet werden, insbesondere für Displays, die auf dem Prinzip der verdrillten Zelle, dem Guest-Host-Effekt, dem Effekt der Deformation aufgerichteter Phasen DAP oder ECB (electrically controlled birefringence), dem IPS-Effekt (in-plane switching) oder dem Effekt der dynamischen Streuung beruhen.

Die Verwendung polarer Biphenyl-Derivate als flüssigkristalline Substanzen ist dem Fachmann bekannt. Es wurden bereits verschiedene Verbindungen mit einem Biphenylsystem als flüssigkristallines oder mesogenes Material und dessen Herstellung beschrieben, wie z. B. in der Druckschrift DE 102006033886 A1. Die Druckschriften WO 2005/019377 A1, DE 43 25 985 A1, WO 91/09008 A1, WO 95/04789 A1, CN 104 745 202 A, WO 2014/094949 A1 und W. Drzewinski (Liquid Crystals 2010, 37, 3, 335-338) offenbaren Cyanobiphenyl-Verbindungen. Isothiocyanat-Biphenyl-Verbindungen werden in CN 103 254 910 B und EP 1 126 006 A2 offenbart. Eine Trifluormethyl-Biphenylverbindung ohne weitere Fluorsubstituenten wird in den Druckschriften E.B. Pinxterhuis et al. (nature communications 2016, 7, 11698), Jing-Yun Yang et al. (Journal of Fluorine Chemistry 2016, 186, 45-51), JP H09 221441 A und DE 19 47 600 A1 offenbart. Eine entsprechende Trifluormethoxy-Biphenylverbindung offenbart J. T. Reeves et al. (Organic Letters 2010, 12,19,4388-4391).

Der vorliegenden Erfindung lag die Aufgabe zugrunde, neue stabile Verbindungen aufzufinden, die als Komponente(n) flüssigkristalliner Medien geeignet sind. Insbesondere sollen die Verbindungen gleichzeitig eine vergleichsweise geringe Viskosität, sowie eine hohe optische Anisotropie besitzen. Für viele aktuelle Mischungskonzepte im Bereich der Flüssigkristalle ist es vorteilhaft, Verbindungen mit einer positiven dielektrischen Anisotropie Δε in Verbindung mit einer hohen optischen Anisotropie zu verwenden.

Im Hinblick auf die verschiedensten Einsatzbereiche derartiger Verbindungen mit hohem Δn war es wünschenswert, weitere Verbindungen, vorzugsweise mit hoher Nematogenität zur Verfügung zu haben, die auf die jeweiligen Anwendungen genau maßgeschneiderte Eigenschaften aufweisen.

Der Erfindung lag somit als eine Aufgabe zugrunde, neue stabile Verbindungen aufzufinden, die als Komponente(n) flüssigkristalliner Medien, insbesondere für z. B. TN-, STN-, IPS- und TN-TFT-Displays, geeignet sind.

Eine weitere Aufgabe der vorliegenden Erfindung war es, Verbindungen bereitzustellen, die für sich oder in Mischungen eine hohe optische Anisotropie Δn, einen hohen Klärpunkt sowie eine niedrige Rotationsviskosität γ₁ aufweisen. Darüber hinaus sollten die erfindungsgemäßen Verbindungen unter den in den Anwendungsgebieten vorherrschenden Bedingungen thermisch und photochemisch stabil sein. Ferner sollten die erfindungsgemäßen Verbindungen möglichst eine breite nematische Phase aufweisen. Als Mesogene sollten sie eine breite nematische Phase in Mischungen mit flüssigkristallinen Cokomponenten ermöglichen sowie hervorragend mit nematischen Basismischungen, insbesondere bei tiefen Temperaturen, mischbar sein. Ebenso bevorzugt sind Substanzen mit einem niedrigen Schmelzpunkt und einer geringen Schmelzenthalpie, da diese Größen wiederum Anzeichen für die oben genannten wünschenswerten Eigenschaften sind, wie z. B. eine hohe Löslichkeit, eine breite flüssigkristalline Phase und eine geringe Neigung zur spontanen Kristallisation in Mischungen bei tiefen Temperaturen. Gerade die Löslichkeit bei tiefer Temperatur unter Vermeidung von jeglicher Kristallisation ist wichtig für den sicheren Betrieb und Transport von Anzeigen in Fahr- und Flugzeugen und im Freien.

Überraschenderweise wurde gefunden, dass die erfindungsgemäßen Verbindungen vorzüglich als Komponenten flüssigkristalliner Medien geeignet sind. Mit ihrer Hilfe lassen sich flüssigkristalline Medien für Displays erhalten, die besonders hohe dielektrische Anisotropien benötigen, insbesondere für TN-TFT- und STN-Displays, aber auch für IPS-Systeme oder neuere Konzepte. Die erfindungsgemäßen Verbindungen sind hinreichend stabil und farblos. Auch zeichnen sie sich durch hohe optische Anisotropien Δn aus, aufgrund derer in der Anwendung in optischen Schaltelementen geringere Schichtdicken und damit niedrigere Schwellenspannungen erforderlich sind. Sie sind für Verbindungen mit vergleichbaren Eigenschaften gut löslich. Darüber hinaus weisen die erfindungsgemäßen Verbindungen einen vergleichsweise sehr hohen Klärpunkt sowie gleichzeitig niedere Werte für die Rotationsviskosität auf. Die Verbindungen besitzen relativ niedrige Schmelzpunkte.

Mit der Bereitstellung der erfindungsgemäßen Verbindungen wird ganz allgemein die Palette der flüssigkristallinen Substanzen, die sich unter verschiedenen, anwendungstechnischen Gesichtspunkten zur Herstellung flüssigkristalliner Mischungen eignen, erheblich verbreitert.

Die erfindungsgemäßen Verbindungen besitzen einen breiten Anwendungsbereich. In Abhängigkeit von der Auswahl der Substituenten können diese Verbindungen als Basismaterialien dienen, aus denen flüssigkristalline Medien zum überwiegenden Teil zusammengesetzt sind. Es können aber auch den erfindungsgemäßen Verbindungen flüssigkristalline Basismaterialien aus anderen Verbindungsklassen zugesetzt werden, um beispielsweise die dielektrische und/oder die optische Anisotropie eines solchen Dielektrikums zu beeinflussen und/oder um dessen Schwellenspannung und/oder dessen Viskosität zu optimieren.

Gegenstand der Erfindung sind somit Verbindungen der Formeln I1 bis I4, 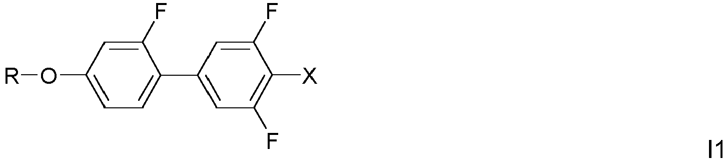 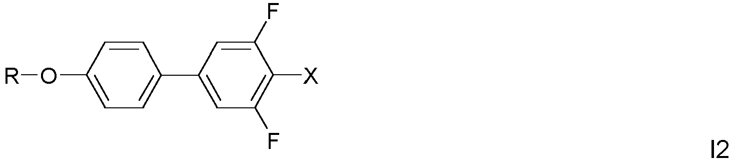 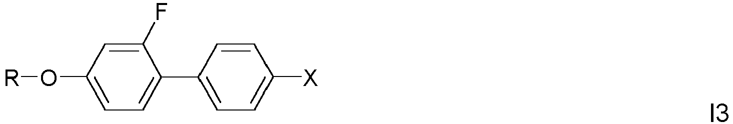 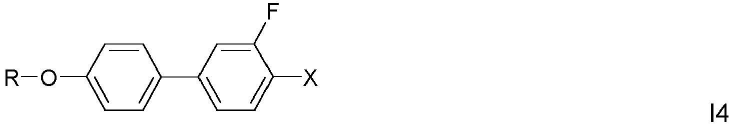 worin
- X: CF₃, -C≡C-CF₃, -CH=CH-CF₃, und
- R: einen halogenierten oder unsubstituierten Alkylrest mit 1 bis 15 C-Atomen, wobei in diesen Resten auch eine oder mehrere CH₂-Gruppen jeweils unabhängig voneinander durch -C≡C- oder -CH=CH- ersetzt sein können,
bedeuten.

Gegenstand der Erfindung ist weiterhin die Verwendung der Verbindungen der Formeln I1 bis I4 in flüssigkristallinen Medien.

Ebenfalls Gegenstand der vorliegenden Erfindung sind flüssigkristalline Medien mit mindestens zwei flüssigkristallinen Komponenten, welche mindestens eine Verbindung der Formeln I1 bis I4 enthalten.

Die Verbindungen der Formeln I1 bis I4 besitzen einen breiten Anwendungsbereich. In Abhängigkeit von der Auswahl der Substituenten können diese Verbindungen als Basismaterialien dienen, aus denen flüssigkristalline

Medien zum überwiegenden Teil zusammengesetzt sind; es können aber auch Verbindungen der Formeln I flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Die Verbindungen der Formeln I1 bis I4 sind in reinem Zustand farblos und bilden für sich oder in Mischungen flüssigkristalline Mesophasen in einem für die elektrooptische Verwendung günstig gelegenen Temperaturbereich. Mit den erfindungsgemäßen Verbindungen lassen sich breite nematischen Phasenbereiche erzielen. In flüssigkristallinen Mischungen erhöhen die erfindungsgemäßen Substanzen die optische Anisotropie deutlich und/oder führen zu einer Verbesserung der Tieftemperatur-Lagerstabilität gegenüber vergleichbaren Mischungen mit hoher dielektrischer Anisotropie. Gleichzeitig zeichnen sich die Verbindungen durch gute UV-stabilität aus.

Der Rest R bedeutet bevorzugt Alkyl oder Alkenyl mit bis zu 8 Kohlenstoffatomen. R bedeutet besonders bevorzugt unverzweigtes Alkyl mit 1 bis 7 C-Atomen.

Der Rest X bedeutet bevorzugt CF₃. Der Rest -CH=CH-CF₃ ist bevorzugt trans-konfiguriert.

Verbindungen der Formeln I1 bis I4 mit verzweigten oder substituierten Flügelgruppen R können gelegentlich wegen einer besseren Löslichkeit in den üblichen flüssigkristallinen Basismaterialien von Bedeutung sein. Bevorzugt ist die Gruppe R geradkettig.

Der Rest R ist besonders bevorzugt ausgewählt aus den Teilstrukturen:
- CH₃
- C₂H₅
- C₃H₇
- C₄H₉
- CH₂-CH=CH₂
- CH₂-CH=CH-CH₃

Unter den Verbindungen der Formeln I1 bis I4 sind die Verbindungen der Formeln I1 und I3 bevorzugt.

Die Verbindungen der Formeln I1 bis I4 werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind und zwar unter Reaktionsbedingungen, die für die genannten Umsetzungen bekannt und geeignet sind. Dabei kann man auch von an sich bekannten, hier nicht näher erwähnten Varianten Gebrauch machen.

Verbindungen der Formeln I1 bis I4 können vorteilhafterweise wie an der folgenden beispielhaften Synthese und den Beispielen ersichtlich hergestellt werden (Schema 1):

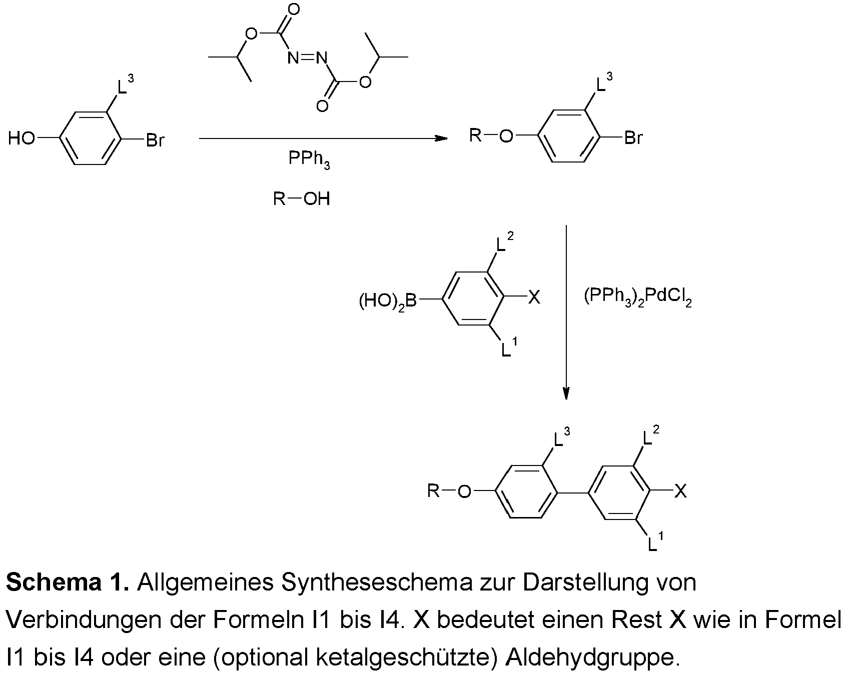

Die beiden polaren Endgruppen -CH=CH-CF₃ und -C≡C-CF₃ lassen sich wie folgt darstellen:

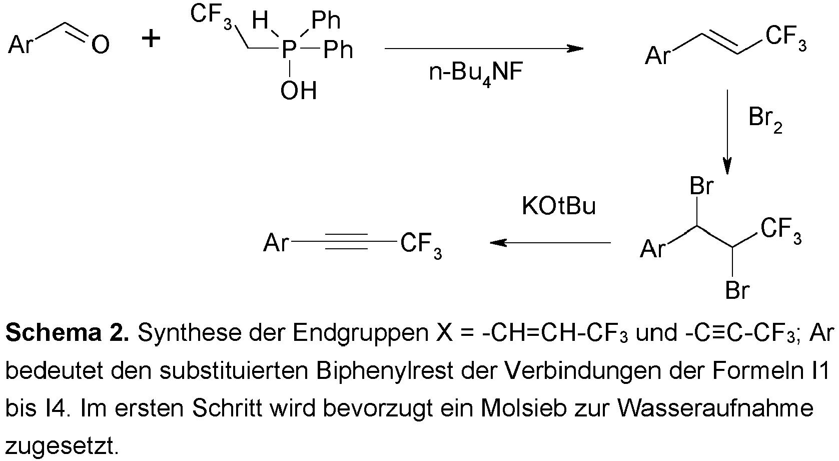

Entsprechende Ausgangsprodukte lassen sich in der Regel vom Fachmann ohne Weiteres über literaturbekannte Synthesemethoden herstellen. Die Synthese der Boronsäurederivate erfolgt beispielsweise durch Metallierung von entsprechenden Halogenverbindungen und anschließender Reaktion mit geeigneten elektrophilen Borverbindungen, wie z. B. Borsäuretrialkylestern. Nach Hydrolyse werden die Boronsäuren für die Suzuki-Kupplung mit Arylbromiden erhalten.

Anstelle der skizzierten Aryl-Bromide können auch lodide, Chloride oder Abgangsgruppen mit vergleichbarer Reaktivität verwendet werden (z. B. die Triflat-Gruppe).

Die Erfindung hat daher auch ein Verfahren zur Herstellung von Verbindungen der Formeln I1 bis I4 zum Gegenstand das einen Verfahrensschritt umfasst, in dem eine Boronsäure der Formel IIA oder ein offenkettiger oder cyclischer Boronsäureester der Formel IIB 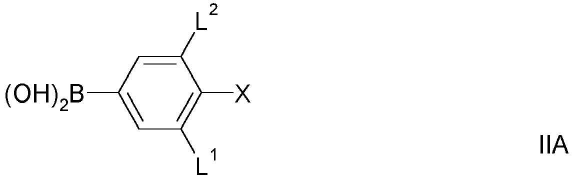 oder 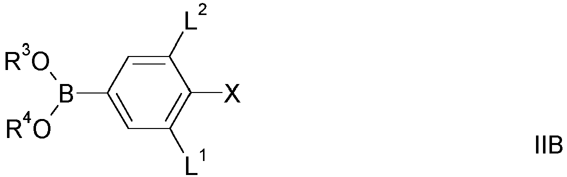
worin X wie für Formel I1 bis I4 definiert ist,
L¹, L² H oder F bedeuten, und
R³, R⁴ ein Alkyl mit 1-12 C-Atomen oder R³+R⁴ zusammen auch ein 2-10 C Alkylen, insbesondere der Formeln
   -CH₂-(CH₂)ₚ-CH₂- und -C(CH₃)₂C(CH₃)₂-, wobei p 0 oder 1 ist
   oder 1,2-Phenylen bedeuten,
   wobei Phenylen, R³, R⁴ und R³+R⁴ auch substituiert sein können,
   mit einer Verbindung der Formel III 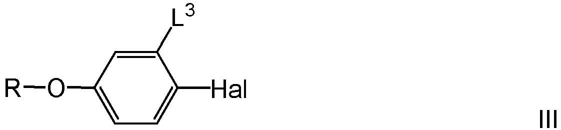 worin
   - R: wie in Formel I1 bis I4 definiert ist,
   - L³: H oder F, und
   - Hal: Cl, Br, I oder O(SO₂)CF₃ bedeutet,
   in Gegenwart eines Übergangsmetallkatalysators zur Reaktion gebracht wird. Dabei entsteht eine Verbindung der Formeln I1 bis I4 oder eine Vorstufe davon.

Der Übergangsmetallkatalysator ist bevorzugt ein Palladiumkomplex der Oxidationsstufe 0, II oder IV. Die Reaktion erfolgt bevorzugt in homogener Phase mit einem löslichen Katalysator. Bei den Komplexen handelt es sich besonders bevorzugt um Bis(triphenylphosphin)palladium(II)chlorid. Die verwendeten Reaktionsmethoden und Reagenzien sind prinzipiell literaturbekannt. Weitere Reaktionsbedingungen können den Ausführungsbeispielen entnommen werden.

Eine Alternative zu dem dargestellten Verfahren besteht darin, dass die reaktiven Gruppen der Reaktionspartner (Boronsäure und Halogenid) ausgetauscht werden.

Weitere, vorangehend nicht genannte, bevorzugte Verfahrensvarianten lassen sich den Beispielen oder den Ansprüchen entnehmen.

Gegenstand der Erfindung sind auch flüssigkristalline Medien enthaltend eine oder mehrere der erfindungsgemäßen Verbindungen der Formeln I1 bis I4. Die flüssigkristallinen Medien enthalten wenigstens zwei Komponenten. Man erhält sie vorzugsweise indem man die Komponenten miteinander vermischt. Ein erfindungsgemäßes Verfahren zur Herstellung eines flüssigkristallinen Mediums ist daher dadurch gekennzeichnet, dass man mindestens eine Verbindung der Formeln I1 bis I4 mit mindestens einer weiteren mesogenen Verbindung vermischt und gegebenenfalls Additive zugibt.

Die erzielbaren Kombinationen aus Klärpunkt, Viskosität bei tiefer Temperatur, thermischer und UV-Stabilität und dielektrischer Anisotropie übertreffen bei weitem bisherige Materialien aus dem Stand der Technik.

Die erfindungsgemäßen, flüssigkristallinen Medien enthalten vorzugsweise neben einer oder mehreren erfindungsgemäßen Verbindungen als weitere Bestandteile 2 bis 40, besonders bevorzugt 4 bis 30 Komponenten. Insbesondere enthalten diese Medien neben einer oder mehreren erfindungsgemäßen Verbindungen 7 bis 25 Komponenten. Diese weiteren Bestandteile werden vorzugsweise ausgewählt aus nematischen oder nematogenen (monotropen oder isotropen) Substanzen, insbesondere Substanzen aus den Klassen der Azoxybenzole, Benzylidenaniline, Biphenyle, Terphenyle, Phenyl- oder Cyclohexylbenzoate, Cyclohexancarbonsäure-phenyl- oder cyclohexylester, Phenyl- oder Cyclohexylester der Cyclohexylbenzoesäure, Phenyl- oder Cyclohexylester der Cyclohexylcyclohexancarbonsäure, Cyclohexylphenylester der Benzoesäure, der Cyclohexancarbonsäure bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexylcyclohexane, 1,4-Bis-cyclohexylbenzole, 4,4'-Bis-cyclohexylbiphenyle, Phenyl- oder Cyclohexylpyrimidine, Phenyl- oder Cyclohexylpyridine, Phenyl- oder Cyclohexyldioxane, Phenyl- oder Cyclohexyl-1,3-dithiane, 1,2-Diphenylethane, 1,2-Dicyclohexylethane, 1-Phenyl-2-cyclohexylethane, 1-Cyclohexyl-2-(4-phenyl-cyclohexyl)-ethane, 1-Cyclohexyl-2-biphenylethane, 1-Phenyl-2-cyclohexyl-phenylethane, gegebenenfalls halogenierten Stilbene, Benzylphenylether, Tolane und substituierten Zimtsäuren. Die 1,4-Phenylengruppen in diesen Verbindungen können auch fluoriert sein.

Die wichtigsten als weitere Bestandteile der erfindungsgemäßen Medien in Frage kommenden Verbindungen lassen sich durch die Formeln 1, 2, 3, 4 und 5 charakterisieren:

R'-L-E-R" 1

R'-L-COO-E-R" 2

R'-L-CF₂O-E-R" 3

R'-L-CH₂CH₂-E-R" 4

R'-L-C≡C-E-R" 5

In den Formeln 1, 2, 3, 4 und 5 bedeuten L und E, die gleich oder verschieden sein können, jeweils unabhängig voneinander einen bivalenten Rest aus der aus den Strukturelementen -Phe-, -Cyc-, -Phe-Phe-, -Phe-Cyc-, -Cyc-Cyc-, -Pyr-, -Dio-, -Py-, -G-Phe-, -G-Cyc- und deren Spiegelbildern gebildeten Gruppe, wobei Phe unsubstituiertes oder durch Fluor substituiertes 1,4-Phenylen, Cyc trans-1,4-Cyclohexylen, Pyr Pyrimidin-2,5-diyl oder Pyridin-2,5-diyl, Dio 1,3-Dioxan-2,5-diyl, Py Tetrahydropyran-2,5-diyl- und G 2-(trans-1,4-Cyclohexyl)-ethyl bedeuten.

Vorzugsweise ist einer der Reste L und E Cyc, Phe oder Pyr. E ist vorzugsweise Cyc, Phe oder Phe-Cyc. Vorzugsweise enthalten die erfindungsgemäßen Medien eine oder mehrere Komponenten ausgewählt aus den Verbindungen der Formeln 1, 2, 3, 4 und 5, worin L und E ausgewählt sind aus der Gruppe Cyc, Phe und Pyr und gleichzeitig eine oder mehrere Komponenten ausgewählt aus den Verbindungen der Formeln 1, 2, 3, 4 und 5, worin einer der Reste L und E ausgewählt ist aus der Gruppe Cyc, Phe, Py und Pyr und der andere Rest ausgewählt ist aus der Gruppe -Phe-Phe-, -Phe-Cyc-, -Cyc-Cyc-, -G-Phe- und -G-Cyc-, und gegebenenfalls eine oder mehrere Komponenten ausgewählt aus den Verbindungen der Formeln 1, 2, 3, 4 und 5, worin die Reste L und E ausgewählt sind aus der Gruppe -Phe-Cyc-, -Cyc-Cyc-, -G-Phe- und -G-Cyc-.

R' und/oder R" bedeuten jeweils unabhängig voneinander Alkyl, Alkenyl, Alkoxy, Alkoxyalkyl, Alkenyloxy oder Alkanoyloxy mit bis zu 8 C-Atomen, -F, -Cl, -CN, -NCS oder -(O)ᵢCH₃₋ₖFₖ, wobei i 0 oder 1 und k 1, 2 oder 3 ist.

R' und R" bedeuten in einer kleineren Untergruppe der Verbindungen der Formeln 1, 2, 3, 4 und 5 jeweils unabhängig voneinander Alkyl, Alkenyl, Alkoxy, Alkoxyalkyl, Alkenyloxy oder Alkanoyloxy mit bis zu 8 C-Atomen. Im folgenden wird diese kleinere Untergruppe Gruppe A genannt und die Verbindungen werden mit den Teilformeln 1a, 2a, 3a, 4a und 5a bezeichnet. Bei den meisten dieser Verbindungen sind R' und R" voneinander verschieden, wobei einer dieser Reste meist Alkyl, Alkenyl, Alkoxy oder Alkoxyalkyl ist.

In einer anderen als Gruppe B bezeichneten kleineren Untergruppe der Verbindungen der Formeln 1, 2, 3, 4 und 5 bedeutet R" -F, -Cl, -NCS oder -(O)ᵢCH₃₋ₖFₖ, wobei i 0 oder 1 und k 1, 2 oder 3 ist. Die Verbindungen, in denen R" diese Bedeutung hat, werden mit den Teilformeln 1b, 2b, 3b, 4b und 5b bezeichnet. Besonders bevorzugt sind solche Verbindungen der Teilformeln 1b, 2b, 3b, 4b und 5b, in denen R" die Bedeutung -F, -Cl, -NCS, -CF₃, -OCHF₂ oder -OCF₃ hat.

In den Verbindungen der Teilformeln 1b, 2b, 3b, 4b und 5b hat R' die bei den Verbindungen der Teilformeln 1a bis 5a angegebenen Bedeutungen und ist vorzugsweise Alkyl, Alkenyl, Alkoxy oder Alkoxyalkyl.

In einer weiteren kleineren Untergruppe der Verbindungen der Formeln 1, 2, 3, 4 und 5 bedeutet R" -CN. Diese Untergruppe wird im Folgenden als Gruppe C bezeichnet und die Verbindungen dieser Untergruppe werden entsprechend mit Teilformeln 1c, 2c, 3c, 4c und 5c beschrieben. In den Verbindungen der Teilformeln 1c, 2c, 3c, 4c und 5c hat R' die bei den Verbindungen der Teilformeln 1a bis 5a angegebenen Bedeutungen und ist vorzugsweise Alkyl, Alkoxy oder Alkenyl.

Neben den bevorzugten Verbindungen der Gruppen A, B und C sind auch andere Verbindungen der Formeln 1, 2, 3, 4 und 5 mit anderen Varianten der vorgesehenen Substituenten gebräuchlich. Alle diese Substanzen sind nach literaturbekannten Methoden oder in Analogie dazu erhältlich.

Die erfindungsgemäßen Medien enthalten neben erfindungsgemäßen Verbindungen der Formeln I1 bis I4 vorzugsweise eine oder mehrere Verbindungen, welche ausgewählt werden aus den Gruppen A, B und/oder C. Die Massenanteile der Verbindungen aus diesen Gruppen in den erfindungsgemäßen Medien sind vorzugsweise:

| | |
|---|---|
| Gruppe A: | 0 bis 90 %, vorzugsweise 20 bis 90 %, besonders bevorzugt 30 bis 90 %; |
| Gruppe B: | 0 bis 80 %, vorzugsweise 10 bis 80 %, besonders bevorzugt 10 bis 65 %; |
| Gruppe C: | 0 bis 80 %, vorzugsweise 0 bis 80 %, besonders bevorzugt 0 bis 50 %; |

wobei die Summe der Massenanteile der in den jeweiligen erfindungsgemäßen Medien enthaltenen Verbindungen aus den Gruppen A, B und/oder C vorzugsweise 5 bis 90 % und besonders bevorzugt 10 bis 90 % beträgt.

Die erfindungsgemäßen Medien enthalten vorzugsweise 1 bis 40 %, besonders bevorzugt 5 bis 30 %, der erfindungsgemäßen Verbindungen.

Die Herstellung der erfindungsgemäßen Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, vorzugsweise bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Weiterhin ist es möglich, die Mischungen auf andere herkömmliche Arten, z. B. durch Verwendung von Vormischungen, z.B. Homologen-Mischungen oder unter Verwendung von sogenannten "Multi-Bottle"-Systemen herzustellen.

Die Dielektrika können auch weitere, dem Fachmann bekannte und in der Literatur beschriebene Zusätze enthalten. Beispielsweise können 0 bis 15 %, vorzugsweise 0 bis 10 %, pleochroitische Farbstoffe, chirale Dotierstoffe, Stabilisatoren oder Nanopartikel zugesetzt werden. Die einzelnen zugesetzten Verbindungen werden in Konzentrationen von 0,01 bis 6 %, vorzugsweise von 0,1 bis 3 %, eingesetzt. Dabei werden jedoch die Konzentrationsangaben der übrigen Bestandteile der Flüssigkristallmischungen also der flüssigkristallinen oder mesogenen Verbindungen, ohne Berücksichtigung der Konzentration dieser Zusatzstoffe angegeben. Die erfindungsgemäßen Flüssigkristallmischungen ermöglichen eine bedeutende Erweiterung des zur Verfügung stehenden Parameterraumes.

Gegenstand der Erfindung sind auch elektrooptische Anzeigen (insbesondere TFT-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Der Ausdruck "Alkyl" umfasst unverzweigte und verzweigte Alkylgruppen mit 1-9 Kohlenstoffatomen, insbesondere die unverzweigten Gruppen Methyl, Ethyl, Propyl, Butyl, Pentyl, Hexyl und Heptyl. Gruppen mit 2-5 Kohlenstoffatomen sind im allgemeinen bevorzugt.

Der Ausdruck "Alkenyl" umfasst unverzweigte und verzweigte Alkenylgruppen mit bis zu 9 Kohlenstoffatomen, insbesondere die unverzweigten Gruppen. Besonders bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "halogenierter Alkylrest" umfasst vorzugsweise ein- oder mehrfach fluorierte und/oder chlorierte Reste. Perhalogenierte Reste sind eingeschlossen. Besonders bevorzugt sind fluorierte Alkylreste, insbesondere CF₃, CH₂CF₃, CH₂CHF₂, CHF₂, CH₂F, CHFCF₃ und CF₂CHFCF₃. Der Ausdruck "halogenierter Alkenylrest" und verwandte Ausdrücke erklären sich entsprechend.

Die Gesamtmenge an Verbindungen der Formeln I1 bis I4 in den erfindungsgemäßen Gemischen ist nicht kritisch. Die Gemische können daher eine oder mehrere weitere Komponenten enthalten zwecks Optimierung verschiedener Eigenschaften.
oder mehrere weitere Komponenten enthalten zwecks Optimierung verschiedener Eigenschaften.

Der Aufbau der erfindungsgemäßen Matrix-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der Matrix-Anzeige, insbesondere auch Matrix-Anzeigeelemente auf Basis von poly-Si TFT.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die folgenden Beispiele erläutern die Erfindung, ohne sie begrenzen zu sollen. Der Fachmann wird in der Lage sein, den Beispielen Details zur Durchführung zu entnehmen, die in der allgemeinen Beschreibung nicht im Einzelnen aufgeführt sind, sie nach allgemeinen Fachkenntnissen zu verallgemeinern und auf eine spezielle Problemstellung anzuwenden.

Vor- und nachstehend bedeuten Prozentangaben Gewichtsprozent. Alle Temperaturen sind in Grad Celsius angegeben. Ferner bedeuten K = kristalliner Zustand, N = nematische Phase, Sm = smektische Phase, Tg = Glaspunkt und I = isotrope Phase. Die Angaben zwischen diesen Symbolen stellen die Übergangstemperaturen dar. Δn bedeutet optische Anisotropie (589 nm, 20 °C), Δε die dielektrische Anisotropie (1kHz, 20 °C) und γ₁ die Rotationsviskosität (20°C; in der Einheit mPa·s).

Die Bestimmung physikalischer, physikochemischer beziehungsweise elektrooptischer Parameter erfolgt nach allgemein bekannten Verfahren, wie sie unter anderem beschrieben sind in der Broschüre "Merck Liquid Crystals - Licristal® - Physical Properties of Liquid Crystals - Description of the Measurements Methods", 1998, Merck KGaA, Darmstadt.
Die dielektrische Anisotropie Δε der einzelnen Substanzen wird bei 20 °C und 1 kHz bestimmt. Dazu werden 5-10 Gew.% der zu untersuchenden Substanz in der dielektrisch positiven Mischung ZLI-4792 (Merck KGaA) gelöst gemessen und der Messwert auf eine Konzentration von 100 % extrapoliert. Die optische Anisotropie Δn wird bei 20°C und einer Wellenlänge von 589,3 nm bestimmt, die Rotationsviskosität γ₁ bei 20°C, beide ebenfalls durch lineare Extrapolation.

In der vorliegenden Anmeldung, bedeutet, wenn nicht ausdrücklich anders angegeben, die Pluralform eines Begriffs sowohl die Singularform als auch die Pluralform, und umgekehrt. Weitere Kombinationen der Ausführungsformen und Varianten der Erfindung gemäß der Beschreibung ergeben sich auch aus den angefügten Ansprüchen.

Folgende Abkürzungen werden verwendet:
- MTB-Ether: Methyl-*tert*-butylether
- THF: Tetrahydrofuran

### Beispiel 1

### Schritt 1

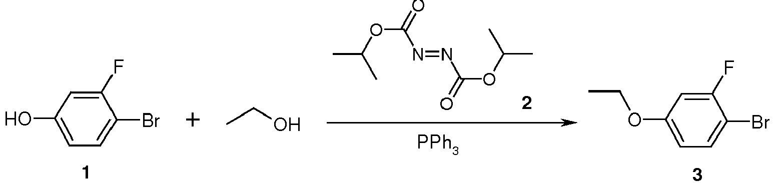

Das Phenol **1,** Ethanol und Triphenylphosphin (je 1 Äqu.) werden in THF gelöst und bei einer Temperatur von unter 30 °C mit der Diazoverbindung **2** versetzt. Anschließend wird das Reaktionsgemisch 12 h bei Raumtemperatur gerührt. Das Lösungsmittel wird entfernt und der Rückstand wird mit einem Gemisch aus Toluol und n-Heptan (9/1) verrührt. Der sich bildende Feststoff wird abgetrennt und das Filtrat über Kieselgel gegeben (Toluol/n-Heptan (9/1)). Ausbeute 85%.

### Schritt 2: 4'-Ethoxy-3,5,2'-4-trifluormethyl-biphenyl

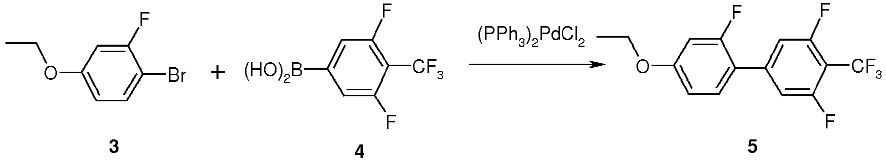

Der Ether **3** und die Boronsäure **4** (je 1 Äqu.) werden mit THF, dem Katalysator (0.01 Äqu.) und einer Lösung von 2 Äqu. Natriummetaborat-Tetrahydrat in Wasser versetzt. Das Gemisch wird nach Zugabe von Hydrazinhydroxid (0.03 Äqu.) 4 h unter Rückfluss erhitzt. Anschließend wird das abgekühlte Reaktionsgemisch mit MTB-Ether versetzt. Die abgetrennte organische Phase wird mit Wasser gewaschen, über Natriumsulfat getrocknet und eingeengt. Der Rückstand wird über Kieselgel gegeben (Chlorbutan). Ausbeute: 70%.
K 45 I
Δε = 28
Δn = 0,096
γ₁ = 33 mPa·s

Analog oder vergleichbar werden hergestellt:

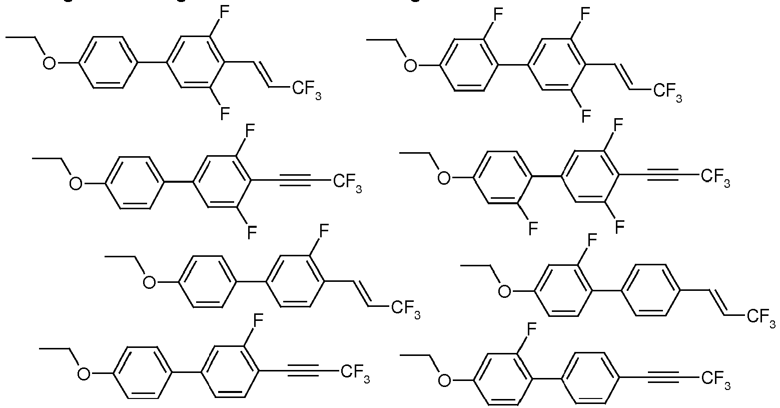

### Weitere Beispiele

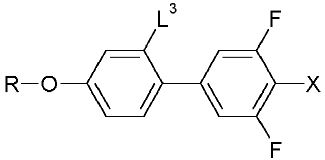

**Tabelle 1: Beispielverbindungen und Messwerte**

| **Nr.** | **R** | **L³** | **X** | **Δε** | **Δn** | **γ₁ [mPas]** | **Phase** |
|---|---|---|---|---|---|---|---|
| 2 | CH₃ | F | CF₃ | 25 | 0,086 | 27 | K 49 I |
| 3 | C₂H₅ | H | CF₃ | 25 | 0,137 | 38 | K 54 I |
| 4 | C₂H₅ | F | CF₃ | 28 | 0,096 | 33 | K 45 I |
| 5 | C₃H₇ | H | CF₃ | 24 | 0,116 | 37 | K 46 I |
| 6 | C₃H₇ | F | CF₃ | 26 | 0,087 | 35 | Tg -66 K 27 I |
| 7 | C₄H₉ | H | CF₃ | 22 | 0,119 | 45 | K 48 I |
| 8 | C₄H₉ | F | CF₃ | 24 | 0,079 | 42 | K 21 I |
| 9 | CH₂CH=CH₂ | H | CF₃ | 20 | 0,120 | 35 | K 27 I |
| 10 | CH₂CH=CH₂ | F | CF₃ | 23 | 0,104 | 31 | K 22 I |
| 11 | CH₂CH=CHCH₃ | H | CF₃ | 24 | 0,147 | 58 | K 76 I |
| 12 | CH₂CH=CHCH₃ | F | CF₃ | 28 | 0,1221 | 52 | K 35 I |

### Beispiel 13 (nur zum Vergleich)

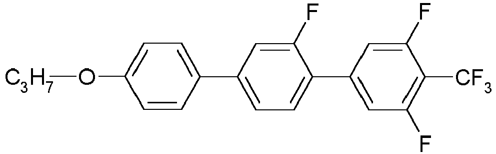

K 100 SmA (94) I
Δε = 28
Δn = 0,234
γ₁ = 401 mPa·s

Weitere Ausführungsformen und Varianten der Erfindung gemäß der Beschreibung ergeben sich auch aus den folgenden Ansprüchen oder aus Kombinationen von mehreren dieser Ansprüche.

## Patentansprüche

1. Verbindungen der folgenden Formeln, 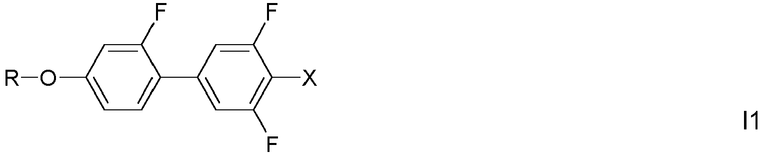 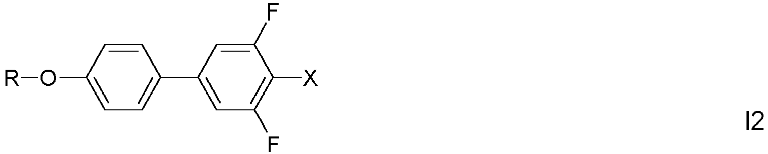 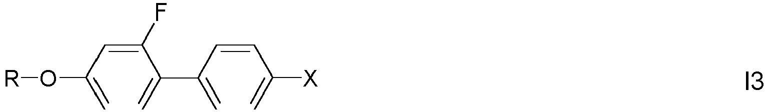 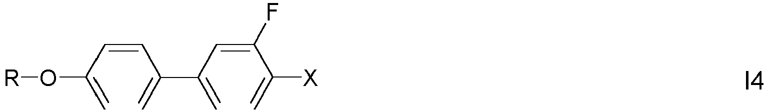 worin
X CF₃, -C≡C-CF₃, -CH=CH-CF₃, und
R einen halogenierten oder unsubstituierten Alkylrest mit 1 bis 15 C-Atomen, wobei in diesen Resten auch eine oder mehrere CH₂-Gruppen jeweils unabhängig voneinander durch -C≡C- oder -CH=CH- ersetzt sein können, bedeuten.

2. Verbindungen nach Anspruch 1, **dadurch gekennzeichnet, dass** R Alkyl oder Alkenyl mit bis zu 8 Kohlenstoffatomen bedeutet

3. Verbindungen nach Anspruch 1 oder 2, **dadurch gekennzeichnet, dass**
X CF₃
bedeutet.

4. Verfahren zur Herstellung von Verbindungen der Formeln I1 bis I4 nach einem oder mehreren der Ansprüche 1 bis 3 umfassend einen Verfahrensschritt, in dem eine Boronsäure der Formel IIA oder ein offenkettiger oder cyclischer Boronsäureester der Formel IIB 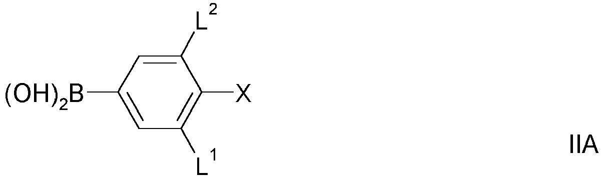 oder 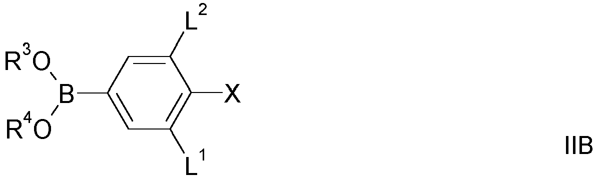
worin X wie in Anspruch 1 definiert ist, und
L¹ und L² unabhängig voneinander H oder F,
R³, R⁴ ein Alkyl mit 1-12 C-Atomen oder R³+R⁴ zusammen auch ein
Alkylen, oder 1,2-Phenylen bedeuten,
wobei Phenylen, R³, R⁴ und R³+R⁴ auch substituiert sein können,
mit einer Verbindung der Formel III 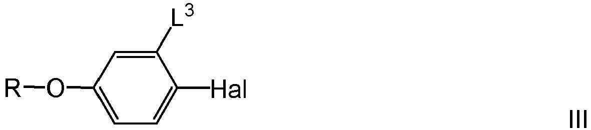
worin R wie in Anspruch 1 definiert ist,
L³ H oder F, und
Hal O(SO₂)CF₃, Cl, Br oder I bedeutet,
in Gegenwart eines Übergangsmetallkatalysators zur Reaktion gebracht wird.

5. Verwendung einer oder mehrerer Verbindungen der Formel I nach einem oder mehreren der Ansprüche 1 bis 3 als Komponenten in einem flüssigkristallinen Medium.

6. Flüssigkristallines Medium enthaltend mindestens zwei mesogene Verbindungen, **dadurch gekennzeichnet, dass** es mindestens eine Verbindung der Formel I nach einem oder mehreren der Ansprüche 1 bis 3 enthält.

7. Verwendung des flüssigkristallinen Mediums nach Anspruch 6 für elektrooptische Zwecke.

8. Elektrooptische Flüssigkristallanzeige enthaltend ein flüssigkristallines Medium nach Anspruch 6.

## Claims

1. Compounds of the following formulae: 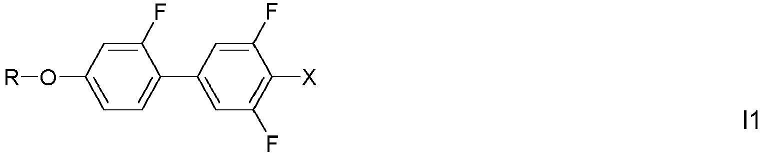 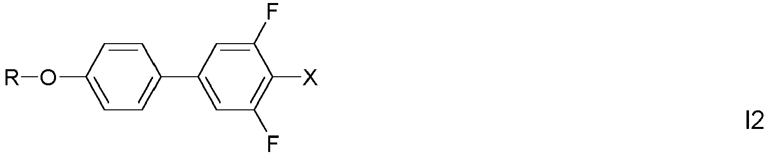 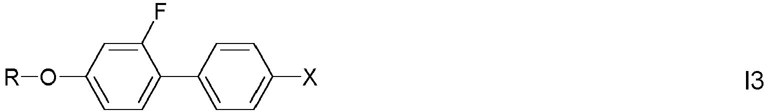 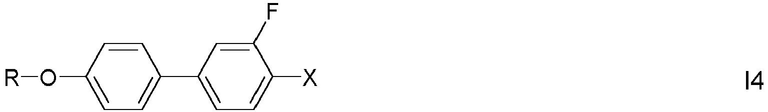 in which
X denotes CF₃, -C≡C-CF₃ or -CH=CH-CF₃, and
R denotes a halogenated or unsubstituted alkyl radical having 1 to 15 C atoms, where, in addition, one or more CH₂ groups in these radicals may in each case be replaced, independently of one another, by -C≡C- or -CH=CH-.

2. Compounds according to Claim 1, **characterised in that**
R denotes alkyl or alkenyl having up to 8 carbon atoms.

3. Compounds according to Claim 1 or 2, **characterised in that**
X denotes CF₃.

4. Process for the preparation of compounds of the formulae 11 to 14 according to one or more of Claims 1 to 3, including a process step in which a boronic acid of the formula IIA or an open-chain or cyclic boron acid ester of the formula IIB 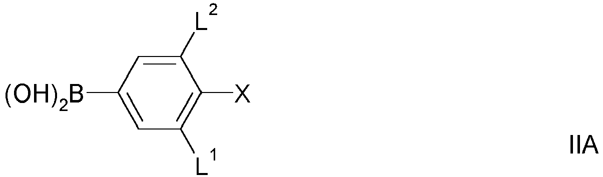 or 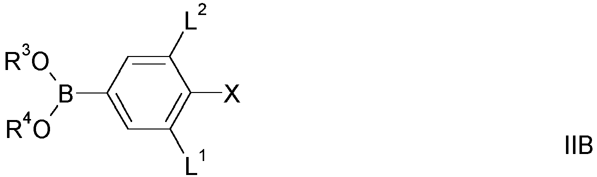
in which X is defined as in Claim 1, and
L¹ and L², independently of one another, denote H or F,
R³, R⁴ denote alkyl having 1-12 C atoms or R³+R⁴ together also denote alkylene, or 1,2-phenylene,
where phenylene, R³, R⁴ and R³+R⁴ may also be substituted,
is reacted with a compound of the formula III 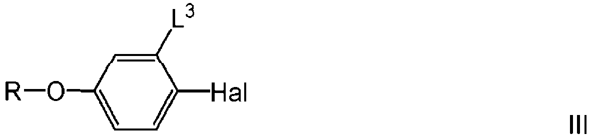
in which R is defined as in Claim 1,
L³ denotes H or F, and
Hal denotes O(SO₂)CF₃, CI, Br or I,
in the presence of a transition-metal catalyst.

5. Use of one or more compounds of the formula I according to one or more of Claims 1 to 3 as components in a liquid-crystalline medium.

6. Liquid-crystalline medium comprising at least two mesogenic compounds, **characterised in that** it comprises at least one compound of the formula I according to one or more of Claims 1 to 3.

7. Use of the liquid-crystalline medium according to Claim 6 for electro-optical purposes.

8. Electro-optical liquid-crystal display containing a liquid-crystalline medium according to Claim 6.

## Revendications

1. Composés des formules qui suivent : 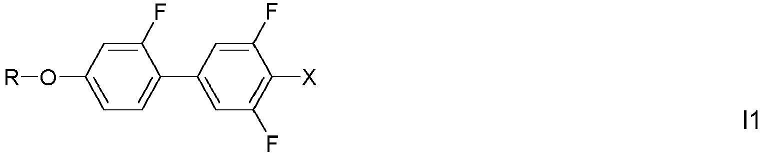 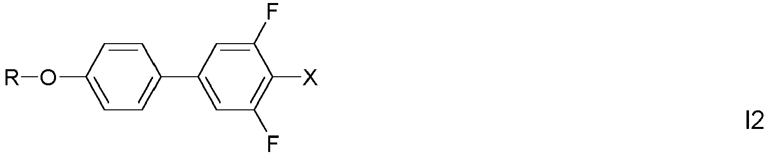 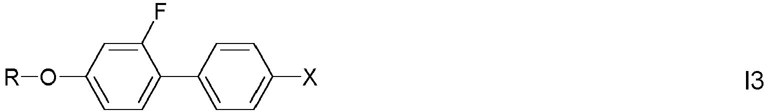 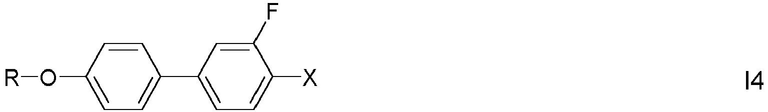 dans lesquelles
X représente CF₃, -C≡C-CF₃ ou -CH=CH-CF₃, et
R représente un radical alkyle halogéné ou non substitué qui comporte de 1 à 15 atome(s) de C, où, en outre, un ou plusieurs groupe(s) CH₂ dans ces radicaux peut/peuvent dans chaque cas être remplacé(s), de manière indépendante les uns des autres, par -C≡C- ou par -CH=CH-.

2. Composés selon la revendication 1, **caractérisés en ce que**
R représente alkyle ou alkényle qui comporte jusqu'à 8 atomes de carbone.

3. Composés selon la revendication 1 ou 2, **caractérisés en ce que**
X représente CF₃.

4. Procédé pour la préparation de composés des formules I1 à I4 selon une ou plusieurs des revendications 1 à 3, incluant une étape de procédé selon laquelle un acide boronique de la formule IIA ou un ester d'acide boronique à chaîne ouverte ou cyclique de la formule IIB 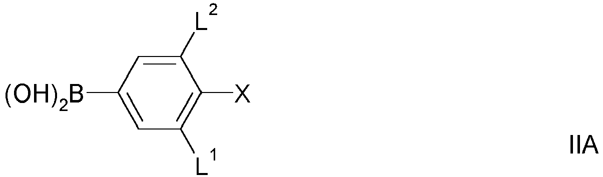 ou 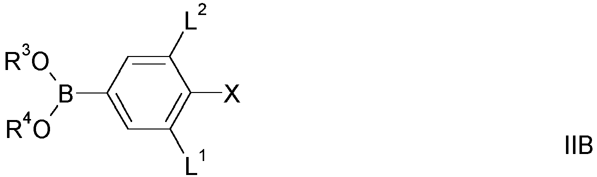
dans lesquelles X est défini tel que selon la revendication 1, et
L¹ et L² représentent, de manière indépendante l'un de l'autre, H ou F,
R³, R⁴ représentent alkyle qui comporte de 1 à 12 atome(s) de C ou
R³+R⁴ en association représentent également alkylène, ou 1,2-phénylène,
où phénylène, R³, R⁴ et R³+R⁴ peuvent également être substitués,
est amené à réagir avec un composé de la formule III 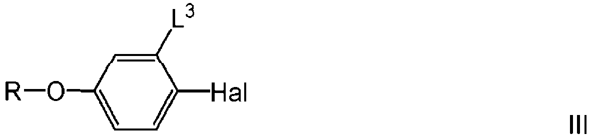
dans laquelle R est défini tel que selon la revendication 1,
L³ représente H ou F, et
Hal représente O(SO₂)CF₃, Cl, Br ou I,
en présence d'un catalyseur à base de métal/métaux de transition.

5. Utilisation d'un ou de plusieurs composé(s) de la formule I selon une ou plusieurs des revendications 1 à 3 en tant que composants dans un milieu cristallin liquide.

6. Milieu cristallin liquide comprenant au moins deux composés mésogènes, **caractérisé en ce qu'**il comprend au moins un composé de la formule I selon une ou plusieurs des revendications 1 à 3.

7. Utilisation du milieu cristallin liquide selon la revendication 6 à des fins électro-optiques.

8. Affichage électro-optique à cristaux liquides contenant un milieu cristallin liquide selon la revendication 6.
